# EUROPEAN PATENT APPLICATION

(11) **EP 1 548 610 A2**
(43) Date of publication of application: **29.06.2005**
(21) Application number: 04257910.2
(22) Date of filing: 17.12.2004
(51) Int. Cl.: G06F 17/22

(54) **Systems and methods for user-specific document change highlighting**

(30) Priority: 22.12.2003 US 740489
(71) Applicant: Xerox Corporation, Rochester, New York 14644 (US)
(72) Inventor: Baltus, Charlotte M., Rochester NY 14620 (US); Martin, Nathaniel G., Rochester NY 14610 (US)
(74) Representative: Skone James, Robert Edmund

(57) **Abstract**

A user-specific change highlighting system and method keeps track of which version of an information object, such as a document, was last viewed by or downloaded to the user. When a user reads or downloads (S210) a new version of the document, the system and method checks (S220) whether the current version is different from the last-viewed version. If the document has changed, the present invention uses, for example, color, font or some other technique to highlight (S250) the changes that have been made to the document.

## Description

The present invention relates generally to systems and methods for alerting a reader of document changes.

Many business or organizational processes involve dissemination of document content on-demand, so that users consistently have access to the latest version of the document. When users are already familiar with a document, they may not read it as carefully as they did the first time they accessed it, and so may miss key changes that occurred since they last saw it. Ensuring that users have the most current information is critical in, for example, situations in which regulations change and accessing out of date material can cause failure to comply with regulations.

There are many businesses and organizations in which it is critical that users access and comprehend the latest version of a document. Examples include aircraft maintenance manuals and health care procedures. In some cases, users are instructed not to save or even memorize instructions. Nevertheless, any technician who accesses content regularly will tend to memorize some parts of it, even inadvertently. The result is that, over time, users will tend to read familiar documents less carefully, especially when time pressures are applied.

Microsoft Word has a feature that finds documents and synchronizes earlier versions of the same document. Document synchronization is the comparison of two or more versions of the same document and determining the differences between the two or more versions. U.S. Patent 6,505,214 to Sherman et al., discloses this feature.

Microsoft Word also has a "track changes" feature that highlights information that has changed in a document. This feature highlights changes according to the person who made the change, not according to who is reading the document.

A drawback of the Microsoft patent is that it synchronizes documents automatically without user intervention and it does not keep track of the information the user has accessed. The Microsoft patent finds the documents that needs synchronization, but does not know which version is the version most recently accessed by the specific user.

A person re-reading a document for new information will not care who made the changes, only that changes were made. In addition, the person reading the document will not care to be notified about changes that were made before the last time he or she accessed the document, only changes that were made since the last time that he or she accessed the document.

Therefore, there is a need for a method and apparatus which delivers information objects annotated to highlight changes since the most recent user access.

In accordance with a first aspect of the present invention, a method for highlighting changes in an information object comprises:
a) identifying a user;
b) obtaining a selected version of an information object requested by the user;
c) obtaining a previous version of the information object based on a result of identifying the user;
d) determining a difference between the selected version of the information object and the previous version of the information object; and
e) outputting a rendered version of the information object highlighting the difference.

In accordance with a second aspect of the present invention, a system for highlighting changes in an information object comprises:
a) means for identifying a user;
b) means for obtaining a selected version of an information object requested by the user;
c) means for obtaining a previous version of the information object based on a result of identifying the user;
d) means for determining a difference between the selected version of the information object and the previous version of the information object; and
e) means for outputting a rendered version of the information object showing the difference.

An information object is any identifiable, renderable electronic information that can be managed so as to trace changes and user access over time. Hereinafter, the description will refer to "document" for convenience.

In embodiments, the present invention keeps track of which version of an information object, such as a document, was last viewed by or downloaded to the user. When a user reads, downloads or otherwise accesses a new version of the document, possibly without even at first knowing that it is a new version, the present invention uses for example color or font or some other way to highlight the changes that have been made to the document since the last time it was accessed by that particular user. The highlighting enables the user to focus his or her attention on those parts of the document that have changed since the last time he or she accessed the document and provides the user with hints as to which parts of the document should be read most carefully. In fact, in some embodiments, only the changes are displayed, and unchanged portions are not displayed. In some embodiments, the present invention renders the document with highlights showing the part of the content that changed since the last time the user accessed the document. The present invention can be implemented through, for example, add-ins to office applications such as a document renderer. Document renderers include, but are not limited to, word processing applications such as MS Word® , Internet Explorer® , Acrobat Reader® , or a printer driver. The document renderer can display the highlighted changes, while a database keeps a record of user access to documents.

The present invention differs from the "synchronizing" prior art systems discussed above in that users specify explicitly which documents they wish to synchronize and the system tracks the versions that the users have seen. The present invention does not need to know which document versions need to be synchronized because this will be determined automatically. For example, those documents that are updated by a regulatory agency may require this type of synchronization.

In a preferred embodiment, the present invention contains a document rendering feature that highlights those parts of the document that have changed since the user last accessed the document, making it easy for the user to focus on those changes. This feature requires that the system be aware of user identity at some level.

For each document accessed by the users of the present invention, a record is made of which user accessed which version of the document. Whenever a user accesses a document, the records are consulted. If the user is accessing a different version from that most recently accessed, a delta, i.e., the difference between the two versions, is determined. The delta can be constructed dynamically on-demand or statically whenever document versions are updated. This delta is used to construct a display that highlights all changes. Outdated content or content that was deleted need not be displayed, although it may be helpful to display an indicator of where content has been removed.

These and other objects, advantages and/or salient features of the invention are described in or apparent from the following description of exemplary embodiments.

Exemplary embodiments of the invention will be described based on the accompanying drawings, wherein like numerals represent like parts, and wherein:
FIG. 1 illustrates an exemplary system according to the invention;
FIG. 2 is a flowchart illustrating an exemplary method of displaying an information object according to the present invention; and
FIG. 3 illustrates an exemplary data flow according to the present invention.

To provide an overall understanding of the invention, certain illustrative embodiments will now be described, including a method and apparatus that synchronizes two versions of a document, and determines the differences between the two versions and renders the documents with the differences highlighted.

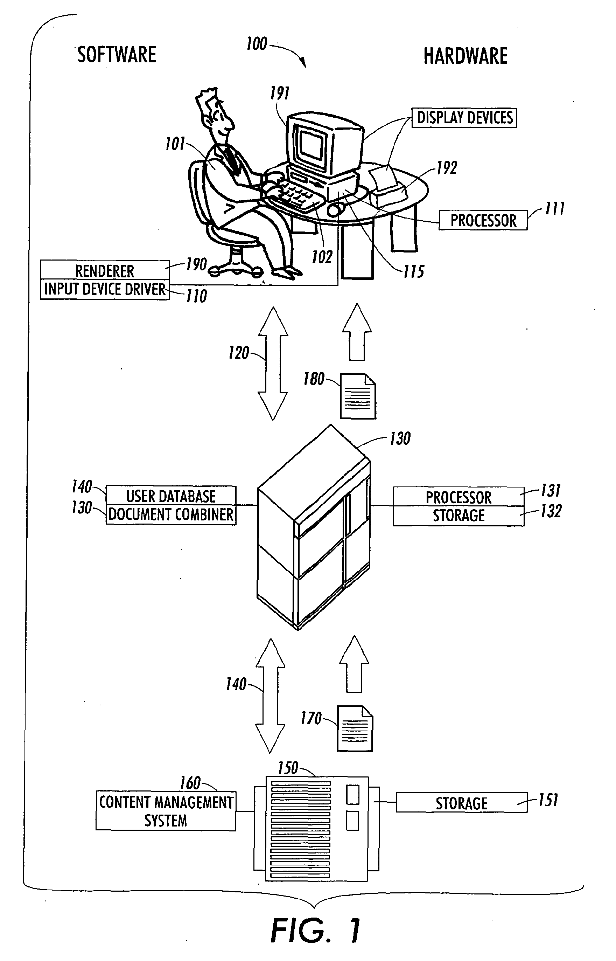

FIG. 1 depicts one exemplary embodiment of a document output system 100 with which the invention may, in one aspect thereof, be implemented. The document output system 100 may be a portion of a cluster within an enterprise or organizational computer network, but the invention is not so limited. The document output system 100 need not be part of a cluster or even a part of an enterprise computer network in some embodiments.

The document output system 100 includes a client device 115 communicating with a system server 130 over communications link or links 120 that in turn, communicates with a storage unit 150 over one or more communication links 140. The communication, for example, could be a document request for a document 180. The client device 115 is a client of the server 130 in a client/server architecture. In this embodiment, the client device 115, requests documents over communications link 140 and receives documents 180 from the server 130 such that material the user 101 has not yet seen is highlighted.

The client device 115 illustrated is a desktop personal computer, including a display monitor, with which a user 101 may interact through one or more input devices such as a keyboard and/or a mouse 102. However, the invention is not so limited, and the client device may literally be any type of device capable of receiving and outputting information. The client device 115 might be some other type of computer, for instance, a work station, a laptop computer, or a handheld computer. The client device's critical aspects are that it lets the user identify him or herself to the server, requests document, and displays the documents returned. Some embodiments might also employ multiple client devices 115 and then mix and match device types, such as by including a computer and a server. Some embodiments of the client device 115 may be or include a printer, Braille writer or the like that output a hard copy with document changes shown in special notes, different colors, underlining, or the like. Some embodiments may be or include an audio output device, which outputs an audio version of the document in a manner that highlights the changes. Some embodiments may include a scanner or digital camera as the input device.

The storage unit 150 may be any type of storage unit, and may even be embedded in the server 130 in some embodiments. The document output system 100 may also include several software or hardware elements. In the illustrated embodiment, these software or hardware elements include: A processor 111 and keyboard 102, a monitor 191 and a printer 192. In this embodiment, the user 101 uses the keyboard 102 to identify himself or herself to the system 100 and to request a particular document. Other embodiments may be a hallway printer with a touch pad or a touch sensitive screen. Those skilled in the art will understand what minimum components are required to implement the methods of the invention discussed below.

The server 130 consists of a processor 131 and storage 132. The storage contains a user database that indicates which version of a requested document the user has viewed most recently in the past. The processor 131, runs a Document Combiner 130 that is capable of calculating the differences, or deltas, between the version of the requested document most recently viewed by the reader and the version actually requested by the reader. Features such a Microsoft Word's synchronization feature or Unix "Diff" can be used as an implementation of the document combiner. The document combiner requests these documents from the Content Server 150 over the data link 140. It receives documents back based on these requests 170.

The Content Server 150 receives requests from the server 130 over communications link 140 and returns the documents requested 170. The Content Server 150 runs content management system (i.e. a piece of software that manages documents) to manage that content in storage 151.

The particular hardware in the various embodiments of the present invention will be specific to a particular implementation. The document output system 100 may be as simple as a single computing device communicating with a server or as distributed as hundreds of computing devices. In fact, a server may not even be necessary to implement the current invention. In alternate embodiments, the document changes may be made directly at the client device 115 itself by one user 101, and then the document may be later viewed at the client device 115 by another user.

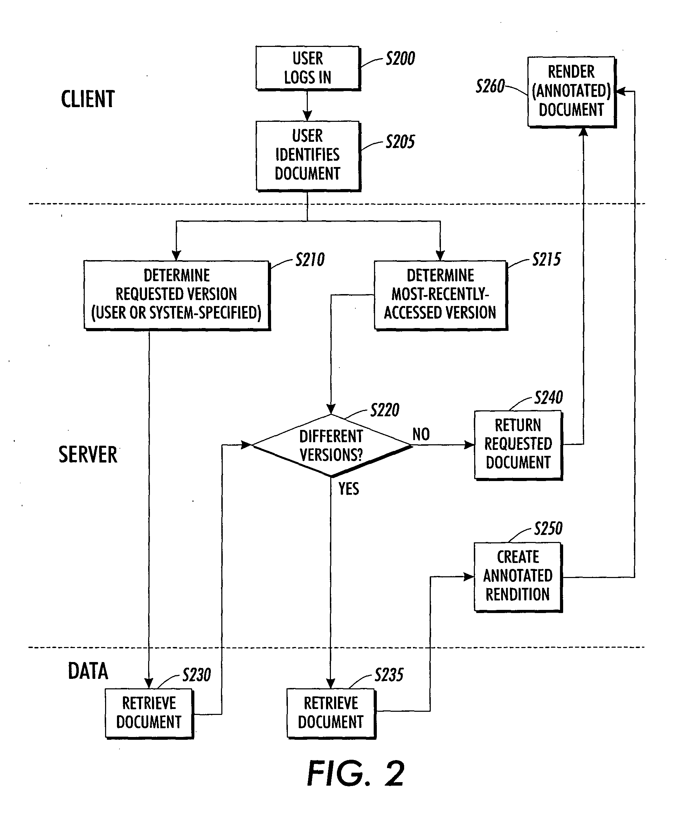

An exemplary method of the present invention is described below and in reference to FIG. 2. The figure depicts three layers, Client, Server, and Data, which correspond to the components 115, 130, and 150 in FIG 1, and are provided for continuity. First, in step S200, the user provides identifying information. In a preferred embodiment, this is accomplished through the well-known procedure of requiring input of a username as the user logs on to a network. Other user identification methods may include any known or later-developed form of voice recognition, retinal scan, fingerprinting, DNA analysis or the like.

In step S205, the user identifies which document they wish to view. In a preferred embodiment, a display for browsing a repository and selecting an entry, similar to the MS Windows file explorer, may be provided, but any method sufficient to obtain the user input is sufficient.

In step S210, the system determines the version of the document being requested. In a preferred embodiment, the current version of the document is automatically selected and retrieved. In another preferred embodiment, the version may be specified by a rule, e.g. the most recent document version or the most recent version that can be accessed by this user. The current version includes, but is not limited to, new documents that were uploaded, scanned or otherwise inputted into a document storage unit, or existing documents that have been revised and stored in a document storage unit.

In step S215, the system determines the version of the identified document that was most recently accessed by the user. Hereinafter, this version will be referred to as the Most Recently Used version, or the MRU version.

In step S230, the system retrieves the document version determined in step S210.

In step S220, the system determines whether the requested document has changed since the last time that the document was accessed by the user. If the document has not changed since the last time that the document was accessed by the user, the document is output as-is in S240. If it is determined that the document has changed since the last time the document was accessed by the user, the method continues to step S235.

In step S235, the MRU version of the document, is acquired.

In step S250, after both the selected version and the MRU version of the document have been acquired, a new rendition, which consists of the requested version annotated to denote changes from the MRU version, is created. There are several available systems that are suitable for denoting changes. For example for text files, systems such as MS Visual Source Safe and the Unix "diff" command, are able to calculate the difference between any two versions of a document. For MS Word documents, MS Word is able to calculate deltas "under the hood" i.e., outside of the view of the user. The system used depends on the format of the content.

In a preferred embodiment, the annotations include, but are not limited to, for example, different fonts or colors, striking through deleted material, underlining added material, adding special notes or symbols before and/or after the added material.

In a preferred embodiment, the rendered document is output S260 to a display device and displayed. In another preferred embodiment, the document is printed by a printing device.

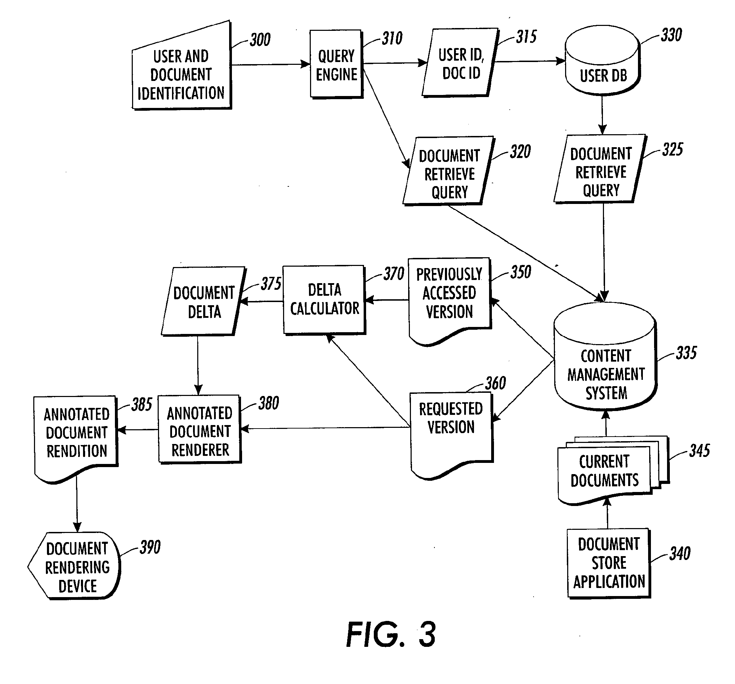

FIG. 3 shows an overview of an exemplary data flow and system structure, according to a preferred embodiment. User and document identifications 300 are input, by which the user requests the a document and optionally some particular rendition of that document. The user identity may be supplied through typical user logon information, such as a username, or by any other known or later developed identification method such as voice recognition, retinal scan, finger printing, DNA analysis or the like. The user and document may be identified at separate points in the data flow, or may both be identified during the logon procedure.

A query engine 310 receives the user input. The engine determines which version of the document is requested. In a preferred embodiment, the current version of the document is automatically selected. In another preferred embodiment, the version may be specified by a rule, e.g. the most recent document version or the most recent version that can be accessed by this user. Two queries are formulated, query 315 and query 320, one for each of the storage components in the preferred embodiment of the system.

In a preferred embodiment, the first storage component, database 330, keeps track of which user most recently accessed which version of a document. The database 330 may be a standalone unit, or may be incorporated as an add-in or portion of the storage of any document repository or content management system, that tracks document versions. Query 315 queries database 300 to determine which version of the document was most recently accessed by this user. Database 330 then formulates another query to obtain the calculated document version from database 335. In preferred embodiments, each time the document is accessed, the database 330 notes the access by the person logged in and associates that person's login ID with the requested version.

In a preferred embodiment, the second storage component, database 335, is a content management system which manages multiple version of documents. The preferred embodiment assumes a means of adding updated content in the database 335, by storing current content 345 via a content store application 340. Query 320 requests the version of the document that was identified by the query engine. Concurrently, query 325 requests the version of the document that was most recently accessed by the user.

The result of both queries, the previously accessed version 350 and the requested version 360 are output by the database 335.

The delta calculator component 370 determines the differences, herein referred to as the delta, between the two retrieved versions of the document, and generates a representation of those differences. The delta may include, but is not limited to, additions, changes and/or deletions. The invention does not specify the representation for deltas, but there are existing representations, as in the output of the unix diff command for text files. The representation is likely to be specific to the format of the document versions being compared.

The document renderer 380 generates a new rendition 385 of the requested document version, annotated to indicate the changes since the document was last accessed by this user. Annotations may include, but is not limited to, one or more of underlining additions, striking through changes, changing a font or color, inserting notes or symbols before and after inserted text, inserting special sounds or words before and/or after added portions in an audio output, and/or the like.

In preferred embodiments, the document renderer 380 produces an output 385, the rendered version of the document. In a preferred embodiment, the output 385 is sent to a display device 390. The display device may be, but is not limited to, a monitor that is capable of displaying the rendered version of the document.

The document rendering device 390 in preferred embodiments is a word processor program.

In another embodiment, deltas between document versions may be calculated at the time that content in the storage system is updated, and thus all differences between document versions would be stored in the content management system. In this case, retrieval of an annotated rendition would be accomplished by providing a query to the content management system that contains two version numbers, the version being requested and the version most recently accessed. The document delta calculator and the annotated document renderer would not be required for this embodiment, although it is likely these components would be part of the storage application.

In another embodiment, information indicating the document version added to the document in the form of a document processing instruction object such as, for example, bar code or glyph that are associated with the document, or the like and contain at least version information for the document. For example, the document is scanned at a multifunction device (not shown), the device accesses the databases 330 and 335 and requests the most recent version and the current version. In this embodiment the database is the set of papers that contain glyph encoded version information. The processor determines the delta between the two documents and highlights the changes. The highlighted rendition of the document is sent to an output device.

In another embodiment, deletions may be indicated by the insertion of words or a graphical image, such as an icon, that indicates where deletions were made in the document.

In another preferred embodiment, the present invention may be implemented by using a content management system such as DocuShare® . In this example, DocuShare® stores documents in Extensible Markup Language (XML) form that notes when each change was made. Each time a user views a document, the version the user viewed is noted. The next time the user accesses the document, all of the elements that have changed since the last access would be highlighted using an Extensible Style Language Translator (XSLT) that translates the document into Hyper Text Markup Language (HTML) for display in the browser. This embodiment would be helpful, where users are not allowed to print documents, to ensure that they always read the most current version.

In another preferred embodiment, the present invention may be implemented by Microsoft Word® . A valid bit array (VBA) script keeps track of each access to a document and stores the accessed version of the document. When the document is accessed a second time, it compares the new document with the stored document and highlights all of changes. MS Word® has a feature that tracks changes in documents, as discussed above. In this example this feature is used to recognize a new document as an instance of a prior one. The additional function requires storing the previously accessed document so the new version can be compared to the previous one and thereby highlighting information that is likely to be new to the person reading a document.

In other embodiments, the document renderer 380 sends the output 385 to a printing device that is capable of printing the rendered version of the document.

It will be understood that various devices shown in FIG. 3 may be implemented within the system depicted in FIG. 1. For example, the database 330 of FIG. 3 may be contained within, or accessed by, the storage 132 of FIG. 1, and database 335 of FIG. 3 may be contained within, or accessed by, the storage 151 of FIG. 1. The processor 131 of FIG. 1 may contain the delta calculator component 370 and the document renderer 380 of FIG. 3. The query interface 310 of FIG. 3 may be associated with the client processor 111 and the server processor 131 of FIG. 1.

It should be understood that each of the processing circuits or devices shown in Figs. 1-3 can be implemented as portions of a suitably programmed general purpose computer. Alternately, each of the processing circuits shown in Figs. 1-3 can be implemented as physically distinct hardware circuits within an ASIC, or using a FPGA, a PDL, a PLA or a PAL, or using discrete logic elements or discrete circuits.

While this invention has been described in conjunction with the specific embodiments outlined above, it is evident that alternatives, modifications and variations may be possible.

For example, in the embodiments described above, the highlighting is applied to the document before the document is output. However, as an alternative, the document may be displayed first and then the highlighting may be applied.

## Claims

1. A method for highlighting changes in an information object, comprising:
a) identifying a user;
b) obtaining a selected version of an information object requested by the user;
c) obtaining a previous version of the information object based on a result of identifying the user;
d) determining a difference between the selected version of the information object and the previous version of the information object; and
e) outputting a rendered version of the information object highlighting the difference.

2. The method of claim 1, wherein c) comprises:
automatically obtaining a version of the information object that was most recently accessed by the identified user.

3. The method of claim 1 or claim 2, wherein e) comprises one or more of i) displaying the rendered version of the information object, ii) printing the rendered version of the information object on a printing device, and iii) encoding information on the stored information in glyphs such that the encoded information designates the version of the information object.

4. A system for highlighting changes in an information object, comprising:
a) means for identifying a user;
b) means for obtaining a selected version of an information object requested by the user;
c) means for obtaining a previous version of the information object based on a result of identifying the user;
d) means for determining a difference between the selected version of the information object and the previous version of the information object; and
e) means for outputting a rendered version of the information object showing the difference.

5. A system according to claim 4, adapted to carry out a method according to any of claims 1 to 3.

6. A system according to claim 4 or claim 5, wherein:
means a) comprise a query interface that receives a user identification and a request for an information object;
means b) and c) comprise a processor that retrieves a selected version of the information object and a previous version of the information object, the previous version being obtained based on the identification;
means d) comprise a delta determination device that determines a difference between the selected version and the previous version; and
means e) comprise a renderer that generates a rendered version of the information object highlighting the difference.

7. A computer program product storing code that, when run on a computer, carries out a method according to any of claims 1 to 3.
